# EUROPÄISCHE PATENTSCHRIFT

(11) **EP 1 392 546 B1**
(45) Veröffentlichungstag und Bekanntmachung des Hinweises auf die Patenterteilung: **03.01.2007**
(21) Anmeldenummer: 02727425.7
(22) Anmeldetag: 16.03.2002
(51) Int. Cl.: B60R 1/00

(54) **VORRICHTUNG ZUM STEUERN ELEKTRISCHER SYSTEME MIT EINEM TESTMODUL**
DEVICE FOR CONTROLLING ELECTRICAL SYSTEMS
DISPOSITIF DE COMMANDE DE SYSTEMES ELECTRIQUES

(30) Priorität: 26.05.2001 DE 10125818
(43) Veröffentlichungstag der Anmeldung: 03.03.2004
(73) Patentinhaber: DaimlerChrysler AG, 70567 Stuttgart (DE)
(72) Erfinder: GISY, Ralf, 71032 Böblingen (DE); GROHMANN, Dieter, 75391 Gechingen (DE)
(86) Internationale Anmeldenummer: PCT/EP2002/002955
(87) Internationale Veröffentlichungsnummer: WO 2002/096707

(56) Entgegenhaltungen:
- EP-A- 0 332 727
- DE-A- 10 014 709
- DE-A- 19 642 843
- DE-C- 19 618 161

## Beschreibung

Die Erfindung betrifft eine Vorrichtung zum Steuern elektrischer Systeme eines Verkehrsmittels. Die Vorrichtung ist innerhalb eines Gehäuses gekapselt, das ein externes Interface aufweist. Die Vorrichtung umfasst einen Mikrorechner zum Ausführen von Steuerungsprogrammen und Speichermittel, auf denen die Steuerungsprogramme und Signale, beispielsweise Ergebnisdaten eines Sensors, von Steuerungsprozessen speicherbar sind, die über eine interne Schnittstelle von einer Ansteuerungssoftware eines Sensors oder Aktors ausgetauscht werden, wie z.B. aus Dokument EP-A. 0332 727 bekannt ist.

Bei Verkehrsmitteln, wie Kraftfahrzeugen oder Flugzeugen, sind elektrische und/oder elektronische Komponenten oft als innerhalb eines Gehäuses gekapselte Mikrorechner ausgeführt. Steuerungsprogramme sind in einem zugeordneten Speichermittel gespeichert und werden aktiviert, um beispielsweise die Messung der Motortemperatur durchzuführen und über Aktoren, d.h. Stellglieder, die Motortemperatur zu steuern oder zu regeln. Zur Ansteuerung der Sensoren oder Aktoren ist eine Ansteuerungssoftware oder Treibersoftware vorgesehen, die neben der Ansteuerung der Sensoren/Aktoren auch deren Datenfluss bewerkstelligt. Dabei werden Daten über eine interne Schnittstelle der Vorrichtung zum Sensor/Aktor hin übertragen und Ergebnisdaten werden vom Sensor/Aktor über die Schnittstelle zurück übertragen, um vom Mikrorechner weiterverarbeitet zu werden.

Der zunehmende Einsatz von elektrischen Komponenten Verkehrsmittel, insbesondere im Kraftfahrzeug, und die steigende Komplexität der Elektronik führt dazu, dass die Funktionalität und Qualität der elektrischen Prozesse und Komponenten in verschiedenen Stadien der Entwicklungsphasen getestet werden müssen. Dazu werden sogenannte Hardware-in-the-Loop (HIL)-Systeme eingesetzt, bei denen das technische Umfeld einer Komponente bezüglich der elektrischen Ein- und Ausgabesignale nachgebildet ist. Beim Testen wird die fertig entwickelte Komponente an das HIL-System angeschlossen, das die reale Fahrzeugumgebung der Komponente mit deren elektrischen Ansteuerungssignalen nachbildet. Aufgrund verschiedener Testsignale wird das elektrische Verhalten der Komponente hinsichtlich möglicher Fehlfunktionen getestet. Auf diese Weise können elektrische Systeme und Komponenten während der Entwicklungsphase allein oder im Komponenten-Verbund getestet werden, bevor der Prototyp des Fahrzeugs existiert.

Der Test von elektrischen Komponenten erfordert heute die Anpassung der zu prüfenden Komponente an einen Simulationsrechner. Da Steuergeräte im Fahrzeug heute innerhalb eines Gehäuses gekapselt sind, ist ein Testvorgang gerade dann problematisch, wenn Sensoren, beispielsweise Messfühler oder Schalter, oder Aktoren, beispielsweise Motoren oder Lampen, innerhalb des Gehäuses angeordnet sind. Zur Anpassung der Komponente an die Simulationsumgebung muss dann das Gehäuse geöffnet werden und Signalleitungen im Steuergerät müssen aufgetrennt und gegebenenfalls für die Testzwecke anders beschaltet werden.

Dadurch ist ein hoher zeitlicher und personeller Aufwand bei der Adaption neuer Hardware-Stände bei Steuergeräten erforderlich. Teilweise werden die geprüften Steuergeräte durch Auftrennung bestehender Signalleitungen zerstört oder beschädigt, so dass sich nach dem Test nicht mehr im Fahrzeug eingesetzt werden können.

Es ist daher Aufgabe der vorliegenden Erfindung, eine Vorrichtung zum Testen von Komponenten im Verkehrsmittel derart weiterzubilden, dass gekapselte Steuergeräte auch ohne Öffnen des Gehäuses automatisiert getestet werden können.

Diese Aufgabe wird erfindungsgemäß durch die Merkmale des Anspruchs 1 gelöst.

Erfindungsgemäß ist das Testmodul an der Schnittstelle zwischen der zu testenden internen Komponente, bspw. Sensor/Aktor, und den Steuerungsprogrammen angeordnet, die den Sensor/Aktor ansteuert und dessen ordnungsgemäßen Einsatz gewährleistet. Durch die besondere Anordnung des Testmoduls an der internen Schnittstelle, über die der gesamte Datenfluss vom und zum Sensor/Aktor verläuft, ist das Testmodul in der Lage, einen automatischen Testprozess mit den Ergebnisdaten der Komponente durchzuführen, ohne dass dabei das Gehäuse der Vorrichtung geöffnet werden muss. Bei einer beispielsweise als Motorsteuergerät umgesetzten Vorrichtung kann durch die interne Anordnung des Testmoduls der Teil am Interface entfallen, der bisher für die Ankopplung eines Signalinterface zur Simulation von Testsignalen erforderlich war.

Das Testmodul kann den Datenfluss von und zur Komponente unterbrechen und die für die Funktion der Komponente erforderlichen Daten selbst simulieren. Ebenso kann der Datenfluss zur Ansteuerung der Komponente ausgehend von den Steuerungsprogrammen an der Schnittstelle unterbrochen werden und das Testmodul kann den Sensor/Aktor mit eigenen Simulationsdaten versorgen. Ferner kann das Testmodul auch den Datenfluss über das externe Interface beeinflussen, wo beispielsweise ein CAN-Datenbus angekoppelt ist.

Das Testmodul weist Funktionen auf, die eine Simulation sowie das Messen und Triggern von Signalen zulassen. Die über die interne Schnittstelle ausgetauschten Daten können einfach parametrisiert werden, ohne dass Hardware-Änderungen im Steuergerät erforderlich sind. Das Testmodul hat Zugriff auf sämtliche über die interne Schnittstelle oder das externe Interface ausgetauschten Daten und kann diverse Testfunktionen ausführen, um die Funktion der Vorrichtung, d.h. der Steuerungsprogramme des Steuergerätes und der internen oder externen Komponenten, d.h. Sensoren oder Aktoren, zu testen.

Das Testmodul ist bevorzugt ein Software-Modul, das zwischen den Steuerungsprogrammen und der Treibersoftware des innerhalb des Gehäuses angeordneten Sensors angeordnet ist. Dadurch können Änderungen im Testvorgang einfach durch Programmierung umgesetzt werden. Das Testmodul kann die Test- und Simulationssignale entweder selbst erzeugen oder von außen über die externe Schnittstelle einlesen, um dann den Sensor mit diesen Testsignalen zu versorgen. Über das externe Interface können auch neue Testprogramme für das Testmodul nachgeladen werden. Dadurch ist eine Anpassung der Testprozesse über Lebenszeit des Steuergerätes möglich.

Dadurch entfällt die aufwendige elektrische Adaption von internen Sensoren/Aktoren der Vorrichtung. Die Anordnung des Testmoduls im Steuergerät selbst führt zu einer erheblichen Kosten-und Zeitersparnis. Die Zerstörung des Testobjekts durch Auftrennung von Signalleitungen ist nicht mehr erforderlich, so dass auch Seriensteuergeräte durch das interne Testsystem getestet werden können. Ferner ist eine einfache und schnelle Manipulation von Schnittstellensignalen möglich, da lediglich die Parametrisierung der Testsignale erforderlich ist.

Das Testmodul weist Funktionen auf, die unterschiedliche elektrische Signale nachbilden können. So können Stromquellen, Stromsenken, ratiometrische Komponenten, Widerstände und Verstärkungen nachgebildet werden. Die Lastsimulation kann entweder mit Original- oder Ersatzlasten erfolgen. Um das Verhalten der elektrischen Komponente, d.h. des Sensors oder Aktors, zu testen, kann jeder Pin des externen Interfaces der Vorrichtung mit einem externen Fehlersimulationsmodul verbunden sein, dass zusätzliche Fehlersignale für die Testphase erzeugt. Hierbei können verschiedene externe Testmodule, wie Hochstrom-, Schwachstrom oder Netzwerk-Testmodule vorgesehen sein. Um eine elektrische Komponente mit dem Testmodul automatisiert testen zu können, ist eine automatische Signalanpassung erforderlich.

Die Vorrichtung kann sowohl einen internen Sensor als auch einen internen Aktor als Komponente aufweisen, deren Werte für einen Test des Steuerungsprogramms durch Simulationssignale über das externe Interface manipuliert werden können. Die internen Komponenten werden innerhalb des gekapselten Gehäuses angeordnet, da dadurch keine weiteren abgeschirmten Gehäuse notwendig sind und die elektrischen Leitungen zu den separaten Gehäusen entfallen können.

Im Normalbetrieb erzeugt der Sensor Messsignale, die in den Steuerungsprogrammen der Vorrichtung verarbeitet werden. Das Testmodul kann in einer ersten Testphase diese Messsignale über das externe Interface einem externen Testmodul zur Verfügung stellen. Des Weiteren kann das Testmodul die Verbindung von der internen Komponente zum Steuerungsprogramm unterbrechen und darüber hinaus von einem externen Test- uns Simulationsmodul über das externe Interface simulierte Messsignale zum test des Steuerungsprogramms einspeisen. Das Testmodul steuert dabei den Datenfluss der simulierten Messdaten, wobei die Vorrichtung mit den simulierten Messsignalen im Normalbetrieb arbeitet ohne dass die übrigen Funktionen der Vorrichtung, bspw. ein interner Aktor/Lampe, gestört werden. Parallel zum Testphase können die realen Messsignale des Sensors dennoch beobachtet und intern oder extern weiterverarbeitet werden. Zusätzlich zu den internen Komponenten, wie Sensoren oder Aktoren, kann das Steuerungsprogramm durch das Testmodul auch über reale Messsignale eines externen Sensors überprüft werden, indem der Signalfluss durch das Testmodul unterbrochen wird und simulierte Testsignale zur Verfügung gestellt werden.

Um zu verhindern, dass die Funktion des Testmoduls unbeabsichtigt aktiviert wird, ist eine Sicherungseinrichtung vorgesehen. Die Sicherungseinrichtung führt eine Berechtigungsprüfung des externen Test- und Simulationssystems durch, welches die simulierten Messsignale über das externe Interface einspeist.

Die Funktion der Steuerungsprogramme kann auch im Zusammenhang mit einem internen Aktor, insbesondere einer Lampe oder einem Display, getestet werden, indem die Ausgangssignale der Steuerprogramme durch das Testmodul überprüft oder über das externe Interface zu einem externen Test- und Simulationssystem zur Auswertung zur Verfügung gestellt werden. Außerdem kann auch der interne Aktor/Sensor geprüft werden indem im simulierte Ansteuerungssignale zur Verfügung gestellt werden und die Reaktion des Aktors/Sensors überprüft wird.

Die Vorrichtung gemäß der vorliegenden Erfindung kann beispielsweise bei einem Steuergerät für hydraulische Drucksensoren beim ESP-Fahrdynamik-System, bei Klimasteuergeräten oder beim Motorsteuergerät bei Kraftfahrzeugen umgesetzt sein.

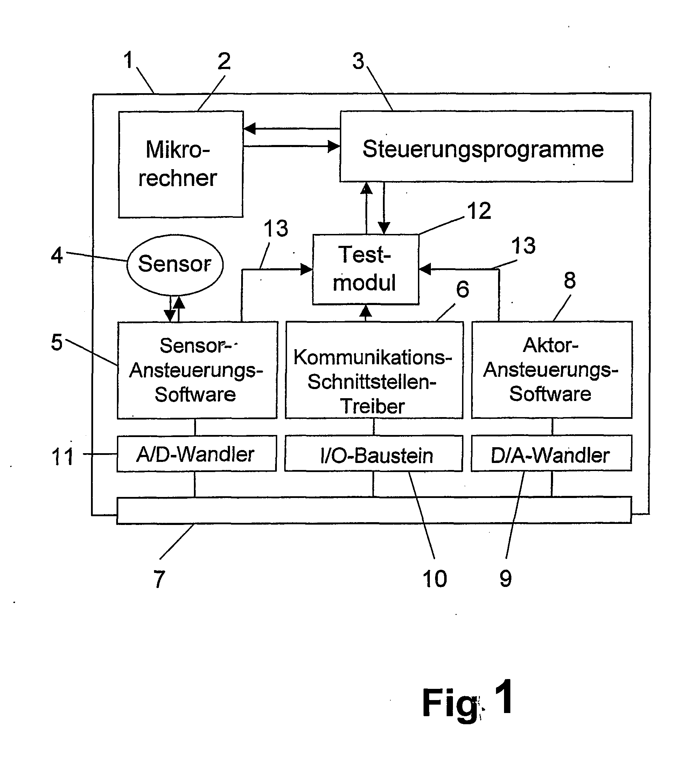

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Figur ist eine Ausführungsform der erfindungsgemäßen Vorrichtung zur Simulation dargestellt. Die Vorrichtung ist als Steuergerät ausgebildet, dessen Software-Architektur mit einem Testmodul gemäß der vorliegenden Erfindung dargestellt ist.

Die Vorrichtung ist als Fahrzeugsteuergerät 1 ausgebildet, das mit anderen Fahrzeugsteuergeräten über einen nicht dargestellten Datenbus verbunden ist. Im Fahrzeugsteuergerät 1 ist ein Mikrorechner 2 zur Steuerung der erforderlichen Fahrzeugfunktionen angeordnet, der Steuerungsprogramme, beispielsweise Funktionssoftware 3 für einen internen Sensor 4, abarbeitet. Die Steuerungsprogramme 3 steuern die unterschiedlichen Prozesse im Fahrzeug, wobei die Prozessorganisation, die Steuergerätekommunikation und die einzelnen Mess- und Steuer-/Regelungsfunktionen der einzelnen Komponenten dabei bearbeitet werden.

Neben den außerhalb des Steuergerätes 1 angeordneten Komponenten ist der Sensor 4 innerhalb des Steuergerätes angeordnet, der bspw. die Umgebungstemperatur des Steuergerätes 1 misst. Dem Sensor 4 ist eine Sensor-Ansteuerungssoftware 5 zugeordnet, die die Eingangs- und die Ergebnisdaten des Sensors entsprechend aufbereitet, so dass diese von der Funktionssoftware der Steuerungsprogramme 3 verarbeitet werden kann. Zur Sensor-Ansteuerungssoftware 5 gehört auch eine sogenannte Treibersoftware, die den Betrieb und die Einbindung des Sensors 4 in die technische Umgebung im Steuergerät 1 ermöglicht.

Im Steuergerät 1 ist außerdem ein Kommunikations-Schnittstellen-Treiber 6 vorgesehen, der die notwendige Kommunikation der Steuerungsprogramme 3 mit anderen Steuergeräten über ein externes Interface 7 ermöglicht. Das externe Interface kann als mehrteiliger Steckverbinder ausgebildet sein und einerseits die Verbindung zu externen Komponenten, wie Sensoren und Aktoren, und anderseits die Verbindung mit einem elektrischen oder optischen Datenbus oder mit einem zusätzlichen externen Test- oder Simulationssystem ermöglichen.

Das Steuergerät 1 weist eine Aktor-Ansteuerungssoftware 8 auf, die einen externen Aktor, bspw. eine Lampe oder einen Elektromotor, ansteuert. Die Aktor-Ansteuerungssoftware 8 passt die Signale der Steuerungsprogramme 3 entsprechend an, so dass der externe Aktor durch diese Signale angesteuert werden kann.

Die Signale der Aktor-Ansteuerungssoftware 8 werden über einen D/A-Wandler 9 entsprechend in analoge Signale gewandelt und liegen dann an den dafür vorgesehenen Steckerpins des externen Interface 7 an, so dass der externe Aktor über einen Steckverbinder daran angeschlossen werden kann. Ebenso ist zwischen dem Kommunikations-Schnittstellen-Treiber 6 und dem externen Interface 7 ein I/O-Baustein 10 vorgesehen, der die Signale einerseits zur Übertragung für einen Datenbus und andererseits für ein externes Test- und Simulationssystem anpasst. Der A/D Wandler 11 wandelt die analogen Signale des internen Sensors 4 in digitale Signale um, so dass diese bei den Steuerungsprogrammen 3 und auch bei den externen Modulen in digitaler Form verwendet werden können.

Das Steuergerät 1 ist von einem Gehäuse umgeben, welches die innerhalb angeordnete Elektronik 2, 3, 8, 10, 11 gegenüber Umwelteinflüssen schützt. Innerhalb dieses Gehäuses ist ein Testmodul 12 angeordnet, das die Funktionsfähigkeit der mit dem Steuergerät I verbundenen Komponenten testet. Insbesondere soll das Testmodul 12 interne Komponenten, wie den internen Sensor 4 testen, und ist dazu im Datenfluss des Sensors 4 zwischen den ansteuernden Steuerungsprogrammen 3 und dem Sensor 4 an einer internen Schnittstelle 13 angeordnet. Das Testmodul 12 überprüft ein- oder abgehende Signale des Sensors 4 auf Fehler. Das Testmodul 12 stellt dazu einen Satz von Testfunktionen als Eingangssignale für den Sensor 4 zur Verfügung und wertet die vom Sensor 4 abgegebenen Ergebnissignale aus. Zusätzlich oder alternativ kann das Testmodul 12 mit einem externen Test- und Simulationssystem in Verbindung stehen und Simulationssignale über das externe Interface 7 einlesen, um diese dann in der Testphase dem internen Sensor 4 als Eingangssignale zur Verfügung zu stellen.

Bezogen auf die Software-Architektur des Steuergerätes 1 stellt das Testmodul 12 eine Schicht zwischen den Steuerungsprogrammen 3 und der Ansteuerungssoftware 5,8 bzw. dem Schnittstellentreiber 6 dar, durch die der gesamte Datenfluss zu und von den zu testenden Komponenten, wie Aktoren und Sensoren 4, verläuft. Auf diese Weise findet neben der Simulation auch Datenmonitoring statt, wobei zusätzlich eine Fehlererkennung aufgrund des Datenflusses implementiert sein kann. Dazu werden Eingangsdaten mit den Ausgangsdaten der Komponenten verglichen und diese werden hinsichtlich der Wertebereiche und des Vorhandenseins bestimmter Signaleigenschaften überprüft. Beispielsweise können Komparatoren durch Vergleich das Überschreiten einer Schwellenspannung feststellen.

Das Testmodul 12 besitzt bestimmte Testfunktionen, um die Funktion des Sensors 4 zu prüfen. Dazu kann das Testmodul 12 den Datenfluss in Richtung des Sensors 4 unterbrechen und die für dessen Funktion notwendigen Signale selbst oder aufgrund der simulierten Signale eines externen Test- und Simulationsmoduls vorgeben. Das Testmodul kann auch den Datenfluss zum Aktor hin unterbrechen. Dazu wird bspw. der Datenfluss oder es werden die Ansteuerungssignale zwischen der Funktionssoftware und der Aktor-Ansteuerungssoftware 8 unterbrochen. Für den Aktor und die Steuerungsprogramme 3 erzeugt das Testmodul 12 dann Signale, die sich für einen Testprozess eignen. Das Testmodul 12 kann auch den Datenfluss zwischen den Steuerungsprogrammen 3 und dem externen Interface 7 unterbrechen und simulierte Testsignale zu Verfügung stellen. Als Testfunktionen eignen sich Sprungfunktionen, Impulse oder harmonische Signale, soweit es sich um analoge Signale handelt.

Das Testmodul 12 weist eine Messeinrichtung auf, die Signale des Sensors, Aktors oder der Funktionssoftware 3 misst und die gewonnene Prozessdarstellung über der Zykluszeit der Funktionssoftware 3 über das externe Interface 7 zu einem externen Rechner überträgt, über den dann die Messergebnisse für den Entwickler oder in einer Werkstatt darstellbar sind. Das externe Interface 7 kann zum Anschluss eines externen Test- und Simulationssystems und für den externen Rechner können über ein bereits im Fahrzeug vorhandenes Kommunikationsmedien erfolgen. Alternativ kann der Testdatenaustausch über eine separate Testschnittstelle, wie bspw. zum Ethernet oder ein Testdatenbus, erfolgen.

Das Testmodul 12 steuert den Testprozess durch ein Testprogramm, das die Datenflüsse unterbricht und einen Satz von Testfunktionen bereitstellt, die den Komponenten eingangsseitig eingespeist werden. Das Testprogramm weist eine dynamische Ausführungsvorschrift für den Testablauf auf, wobei die Ausführungszeiten der Steuergerätesoftware beeinflusst werden kann. Bestimmte Testfunktionen werden über das externe Interface 7 eingespeist. Das Protokoll und die Testfunktionen, die über das externe Interface übertragen werden, sind bezüglich ihres Datenformates vom Interface unabhängig, so dass das Testmodul 12 ohne Abwandlung auch in anderen Steuergeräten variabel eingesetzt werden kann.

Das Testmodul 12 führt Testprogramme aus, die einerseits im Testmodul 12 selbst und alternativ über eine externes Test- und Simulationssystem bereitgestellt sind. Diese Testprogramme können über das externe Interface 7 in das Testmodul 12 geladen werden und von diesem ausgeführt werden. Die Ausführung der Testprogramme kann während des Einsatzes des Steuergerätes 1 im Fahrzeug synchron zur Zykluszeit der Funktionssoftware 3 ausgeführt werden. Die Testprogramme haben Zugriff auf alle internen Prozessgrößen und während ihrer Ausführung greifen Sie auf Funktionen des Testmoduls 12 zurück, die ein Messen, Triggern von Signalen zulassen.

Das Testmodul 12 kann Programme und Funktionen aufweisen, die als Software-Code, bspw. in der Sprache C, programmiert sind. Das Testmodul 12 ist so programmiert oder ausgeführt, dass im Normalbetrieb des Steuergerätes 1 keine Störungen im Programmablauf oder im Datenfluss auftreten. Das Testmodul 12 ist integraler Bestandteil des Steuergerätes 1 und kann zumindest teilweise Bestandteil der Steuergerätesoftware sein. Um unbeabsichtigte Eingriffe in sicherheitsrelevante Bereiche der Funktionssoftware 3 zu vermeiden, ist ein Sicherheitsmechanismus zur Verriegelung des Testmoduls im Normalbetrieb des Steuergerätes vorgesehen. Dabei ist zur Vermeidung ungewollter Manipulation der Steuerung des Testmoduls 12 ein Zugriff nur über ein Authentifizierungsverfahren möglich.

## Patentansprüche

1. Vorrichtung zum Steuern elektrischer Systeme eines Verkehrsmittels, die innerhalb eines mit einem externen Interface (7) versehenen Gehäuses gekapselt ist und die einen Mikrorechner (2) zum Ausführen von Steuerungsprogrammen (3) und Speichermittel aufweist, auf denen Steuerungsprogramme (3) zur Ansteuerung einer elektrischen Komponente (4) und Signale der Komponente (4) speicherbar sind, wobei die Signale über eine interne Schnittstelle (13) von einer Ansteuerungssoftware (5, 8) der elektrischen Komponente (4) ausgetauscht werden, ein Testmodul (12) innerhalb des Gehäuses und an der internen Schnittstelle (13) der Komponente (4) vorgesehen ist, um die über die Schnittstelle (13) ausgetauschten Signale der Komponente (4) auszuwerten und um die ordnungsgemäße Funktion der Komponente oder des Steuerungsprogramms (3) zu testen, **dadurch gekennzeichnet, dass** ein interner Sensor oder interner Aktor als interne Komponenten (4) innerhalb des gekapselten Gehäuses angeordnet sind, dass das Testmodul (12) zwischen den Steuerungsprogrammen (3) und der internen Komponente (4) angeordnet ist, wo der gesamte Datenfluss zu und von den zu testenden Komponenten (4) verläuft, dass das Testmodul die ein- oder abgehenden Signale der internen Komponente (4) auf Fehler überprüft und dass das Testmodul (12) an der internen Schnittstelle (13) die Signalübertragung der Steuerungsprogramme (3) unterbricht und dort Ersatzsignale einspeist, um ein Testen während des Normalbetriebs der Vorrichtung (1) zuzulassen.

2. Vorrichtung nach Anspruch 1, **dadurch gekennzeichnet, dass** das Testmodul (12) an der Schnittstelle (13) Testsignale für die Komponente (4) einspeist.

3. Vorrichtung nach Anspruch 1 oder 2, **dadurch gekennzeichnet, dass** Testmodul Mittel zum Messen, Triggern und Anpassen von analogen Signalen aufweist.

4. Vorrichtung nach Anspruch 1, **dadurch gekennzeichnet, dass** das Testmodul Signale von einem an dem externen Interface (7) angeschlossenen Test- und Simulationssystem empfängt, den Testprozess mit diesen importierten Signalen durchführt und die Ergebnisdaten über das externe Interface (7) exportiert.

5. Vorrichtung nach Anspruch 1, **dadurch gekennzeichnet, dass** das Testmodul (4) ein modulares Softwareprogramm ist, das auf dem Speichermittel der Vorrichtung (1) abgelegt ist, um innerhalb des Gehäuses angeordnete Komponenten (4) zu testen.

6. Vorrichtung nach einem der Ansprüche 1 oder 2, **dadurch gekennzeichnet, dass** das Testmodul (12) während des Normalbetriebs Teile des Steuerungsprogramms (3) testet, indem dem Steuerungsprogramm (3) Ersatzsignale für die Signale des Sensors (4) eingespeist werden.

## Claims

1. Device for controlling electrical systems of a means of transportation, which is encapsulated within a housing provided with an external interface (7) and which has a microcomputer (2) for executing control programs (3) and storage means on which control programs (3) for actuating an electrical component (4) and signals of the component (4) can be stored, the signals being exchanged via an internal interface (13) by actuation software (5, 8) of the electrical component (4), and a test module (12) being provided within the housing and at the internal interface (13) of the component (4) in order to evaluate the signals of the component (4) which are exchanged via the interface (13) and in order to test the satisfactory functioning of the component or of the control program (3), **characterized in that** an internal sensor or internal actuator is arranged as an internal component (4) within the encapsulated housing, **in that** the test module (12) is arranged between the control programs (3) and the internal component (4) where the entire data flow to and from the components (4) to be tested runs, **in that** the test module checks the incoming or outgoing signals of the internal component (4) for faults and **in that** the test module (12) at the internal interface (13) interrupts the transmission of signals of the control programs (3) and feeds in equivalent signals there in order to permit testing during the normal operation of the device (1).

2. Device according to Claim 1, **characterized in that** the test module (12) feeds in test signals for the component (4) at the interface (13).

3. Device according to Claim 1 or 2, **characterized in that** the test module has means for measuring, triggering and adapting analogue signals.

4. Device according to Claim 1, **characterized in that** the test module receives signals from a test and simulation system which is connected to the external interface (7), carries out the test process with these imported signals and exports the result data via the external interface (7).

5. Device according to Claim 1, **characterized in that** the test module (4) is a modular software program which is stored on the storage means of the device (1) in order to test components (4) arranged within the housing.

6. Device according to either of Claims 1 and 2, **characterized in that**, during the normal operation, the test module (12) tests parts of the control program (3) by feeding equivalent signals for the signals of the sensor (4) into the control program (3).

## Revendications

1. Dispositif pour commander des systèmes électriques d'un moyen de transport qui est logé à l'intérieur d'un boîtier muni d'une interface externe (7) et qui présente un microordinateur (2) pour exécuter des programmes de commande (3) et des moyens de mémorisation sur lesquels peuvent être enregistrés des programmes de commande (3) destinés à commander un composant électrique (4) et des signaux du composant (4), les signaux étant échangés par un logiciel de commande (5, 8) du composant électrique (4) par le biais d'une interface interne (13), un module de test (12) étant prévu à l'intérieur du boîtier et sur l'interface interne (13) du composant (4) afin d'interpréter les signaux du composant (4) échangé par le biais de l'interface (13) et de tester le bon fonctionnement du composant ou du programme de commande (3), **caractérisé en ce que** qu'un capteur interne ou un actionneur interne sont disposés à l'intérieur du boîtier scellé en tant que composants internes (4), que le module de test (12) est disposé entre les programmes de commande (3) et le composant interne (4) à l'endroit où passe la totalité du flux de données vers et depuis les composants (4) à tester, que le module de test vérifie l'éventuelle présence d'erreurs dans les signaux entrants et sortants du composant interne (4) et que le module de test (12) interrompt la transmission du signal des programmes de commande (3) au niveau de l'interface interne (13) et y injecte des signaux de substitution afin de permettre un test pendant le fonctionnement normal du dispositif (1).

2. Dispositif selon la revendication 1, **caractérisé en ce que** le module de test (12) injecte au niveau de l'interface (13) des signaux de test pour le composant (4).

3. Dispositif selon la revendication 1 ou 2, **caractérisé en ce que** le module de test présente des moyens pour mesurer, déclencher et adapter des signaux analogiques.

4. Dispositif selon la revendication 1, **caractérisé en ce que** le module de test reçoit des signaux de la part d'un système de test et de simulation raccordé à l'interface externe (7), exécute le processus de test avec ces signaux importés et exporte les données du résultat par le biais de l'interface externe (7).

5. Dispositif selon la revendication 1, **caractérisé en ce que** le module de test (4) est un logiciel modulaire qui est stocké sur les moyens de mémorisation du dispositif (1) afin de tester les composants (4) disposés à l'intérieur du boîtier.

6. Dispositif selon l'une des revendications 1 ou 2, **caractérisé en ce que** le module de test (12) teste des parties du programme de commande (3) pendant le fonctionnement normal en injectant dans le programme de commande (3) des signaux de substitution pour les signaux du capteur (4).
